# EUROPÄISCHE PATENTSCHRIFT

(11) **EP 0 317 779 B1**
(45) Veröffentlichungstag und Bekanntmachung des Hinweises auf die Patenterteilung: **31.08.1994**
(21) Anmeldenummer: 88117828.9
(22) Anmeldetag: 26.10.1988
(51) Int. Cl.: H04N 1/032, B41C 1/10

(54) **Elektrische Aufzeichnungseinrichtung für Druckformen von Druckmaschinen**
Electrical recording device for printing forms for printing machines
Dispositif électrique d'enregistrement pour formes d'impression pour appareils à imprimer

(30) Priorität: 26.11.1987 DE 3740079
(43) Veröffentlichungstag der Anmeldung: 31.05.1989
(73) Patentinhaber: M.A.N.-ROLAND Druckmaschinen Aktiengesellschaft, 63012 Offenbach (DE)
(72) Erfinder: Hirt, Alfred, Dr. Dipl.-Phys., D-8000 München 71 (DE)

(56) Entgegenhaltungen:
- EP-A- 0 065 343
- EP-A- 0 167 352
- PATENT ABSTRACTS OF JAPAN vol. 6, no. 2 (P-096) 08 Januar 1982, & JP-A-56 126856 (TOSHIBA) 05 Oktober 1981

## Beschreibung

Die Erfindung bezieht sich auf eine elektrische Aufzeichnungseinrichtung mit mindestens einer als Elektrode ausgebildeten Schreibeinheit zur örtlichen und punktförmigen Beeinflussung von Druckformen für Druckmaschinen, wobei die Schreibeinheit(en) an eine Spannungsquelle anschließbar und entsprechend einem auf die Druckform zu übertragenden Druckbild ansteuerbar ist bzw. sind.

Es sind sogenannte löschbare Druckformen bekannt, die aufgespannt in der Druckmaschine wiederholt einsetzbar sind. Mittels Wärme, elektrischer Spannung und dergleichen wird ein auf die Druckform aufgebrachtes Druckbild gelöscht und mittels ähnlicher Energieformen neu beschrieben.

In der DE-A- 36 33 758 ist ein Beispiel eines derartigen Systemes beschrieben, bei dem die Druckform aus einem ferroelektrischen Material besteht und örtlich unterschiedlich polarisierbar ist, wovon die Druckfarben-Benetzbereitschaft abhängt. Für den Umpolarisierungsvorgang wird beispielsweise ein Elektrodenpaar verwendet, von dem eine Elektrode als Schreibstift ausgebildet ist und entsprechend eines zu übertragenden Bildes ansteuerbar bzw. an eine Spannungsquelle jeweils kurzzeitig anlegbar ist. Auf die zweite Elektrode ist die Druckform aufgespannt.

Ein weiteres System mit löschbaren Druckformen ist in der DE-A- 37 05 439 beschrieben. Hier handelt es sich um eine Druckform aus einem elektrisch leitfähigen Polymer, das elektrochemisch ansteuerbar ist. Auch hier bedarf es einer sorgfältigen Auslegung der Aufzeichnungseinrichtung, um im Querschnitt punktförmige und genau begrenzte elektrische Felder für die Ansteuerung der Druckform zu erzeugen.

Die Problematik in der Verwirklichung derartiger Aufzeichnungseinrichtungen wird auch dadurch ausgelöst, daß die Umsteuerung von Spannungen auf Stromlosigkeit und umgekehrt in möglichst kurzer Zeit durchgeführt sein müßte, um den Anforderungen der heute technisch hochentwickelten Druckmaschinen gerecht zu werden.

Der Erfindung liegt daher die Aufgabe zugrunde, eine Aufzeichnungseinrichtung der eingangs genannten Art zu entwickeln, mit der eine rasche und möglichst präzise Ansteuerung von Druckformen möglich ist.

Die Aufgabe wird erfindungsgemäß bei einer gattungsgemäßen Vorrichtung mit den im Anspruch 1 gekennzeichneten Merkmalen gelöst.

Eine Schreibeinheit ist dabei ein mit einer Spitze versehener Schreibstift. Dieser wird zur Erzeugung eines im Querschnitt punktförmigen Feldes optisch angesteuert, indem mit Lichtimpulsen der Fotoleiter örtlich bestrahlt wird. Die bestrahlte Stelle des Fotoleiters wird elektrisch leitfähig, und zwar mit mit einer Leitfähigkeit, die von der eingestrahlten Lichtintensität abhängt. Damit wird das von der Spannungsquelle abgeleitete Potential für den Schreibstift gesteuert. Es ist auf diese Weise nicht nur möglich, eine zeitlich weitgehend präzise, sondern auch eine quanitativ variable Ansteuerung der Schreibstifte zu erreichen. Für die Ansteuerung des Fotoleiters können beliebige Strahlen verwendet werden. Aus Wirtschaftlichkeitsgründen wird eine Lichtquelle bevorzugt, mit der der geringste Geräteaufwand verbunden ist.

Mit an den Schreibspitzen erzeugbaren unterschiedlichen elektrischen Feldern lassen sich über die entsprechend behandelte Druckform beim Druck unterschiedliche Graustufen einbringen.

Die Einkopplung von punktuellen Lichtstrahlen auf den Fotoleiter erfolgt vorzugsweise über Lichtleiter, was den den Vorteil hat, daß im engen Raum zahlreiche und untereinander abgrenzbare Lichtstrahlen auf den Fotoleiter einbringbar sind.

Durch eine Kombination von mehreren, einzeln ansteuerbaren Lichtleitern kann die auf den Fotoleiter zu richtende Lichtintensität in einer einfachen Weise variiert werden, indem für einen Punkt das Licht je nach der gewünschten Intensität durch einen oder mehrere Leiter gleichzeitig geleitet wird. Hierbei sind jeweils einem Schreibstift mehrere, etwa 4 bis 6 Lichtleiter zugeordnet, die zwischen dem Fotoleiter und einer gemeinsamen Lichtquelle angeordnet sind. Die Anzahl von Lichtleitern, die einem Schreibstift zugeordnet werden können, ist begrenzt, trotzdem kann das Spektrum der Lichtintensität bzw. der Graustufen erweitert werden, indem die einem Schreibstift zugeordneten Lichtleiter ihrerseits unterschiedliche Lichtintensität ausstrahlen. Durch unterschiedlich Kombinationen der angesteuerten Lichtleiter lassen sich auf diese Weise unterschiedliche Graustufen erzeugen.

Gemäß einer weiteren Ausgestaltung der Erfindung ist zur Ansteuerung der Lichtquelle ein magneto-optisches Lichtschaltmodul vorgesehen.

Magneto-optische Lichtschaltmodule, die unter dem Namen "LISA" (Licht-Schalt-Anordnung) bekannt sind, enthalten punktförmige Lichtschaltzellen, die voneinander unabhängig auf thermomagnetischem Wege zwischen einem lichtdurchlässigen und einem lichtundurchlässigen Zustand hin- und hergeschaltet werden können. Die Wirkungsweise beruht darauf, daß eine einkristalline Schicht aus Eisen-Wismut-Granat auf einem Substrat aus Gadolinium-Gallium-Granat spontan magnetisiert werden kann und dabei die Polarisationsrichtung von Licht dreht. Aufgrund bestimmter Kristalleigenschaften können die LISA-Elemente nur zwei stabile Zustände annehmen, die zum Ein- bzw. Ausschalten der Lichtquelle genutzt werden.

Der Schaltvorgang für die Ansteuerung eines Schreibstiftes erfolgt hierbei vollkommen kontaktlos, womit Spannungen im Bereich von kV mit für Druckmaschinen erwünschten Taktfrequenzen im Bereich von 10 ⁵, 10 ⁶ Hz schaltbar sind. Mit konventionellen Elektronik-Schaltelementen ist im kV-Bereich eine derartige Schaltfrequenz sehr schwierig zu bewerkstelligen.

Die Lichtschaltmodule sind vorzugsweise in den Lichtleitern zwischengeschaltet. Sie werden mit Zeitimpulsen angesteuert, um einen Lichtimpuls von der Lichtquelle über den zugehörigen Lichtleiter auf den Fotoleiter zu richten. Hiermit können Schaltvorgänge erreicht werden, die nur einige µs dauern.

Die Schaltmodule können gleichzeitig als Lichttrichter verwendet werden, um Lichtstrahlen aus mehereren Lichtleitern in einen Leiter einzukoppeln. Diese Möglichkeit bietet eine einfache Ausgestaltung zur Einbringung von unterschiedlichen Lichtintensitäten in verschiedene Lichtleiter, die einem Schreibstift zugeordnet sind, um somit eine Vielzahl von Grautönen für einen Druck vorsehen zu können.

Gemäß einer weiteren Ausgestaltung der Erfindung sind mehrere Schreibstifte in mindestens einer Reihe über einen gemeinsamen Fotoleiter mit einer gemeinsamen Spannungsquelle verbunden. Eine Schreibstiftreihe füllt die Breite der Druckform aus, so daß durch rasterartige Ansteuerung der Schreibstifte die Einkopplung der Bilddaten auf die gesamte Breite der Druckform möglich ist, ohne die Schreibstifte mechanisch bewegen zu müssen, während die Einkopplung über die Länge bzw. den Umfang der Druckform durch entsprechende Bewegung der Druckform selbst erfolgt. Damit ist eine rasche Einkopplung der Bilddaten in die Druckform möglich.

Wenn ein Spitzenabstand der Schreibstifte nicht entsprechend dem geforderten Rasterpunktabstand realisiert werden kann, werden mindestens zwei Reihen Schreibstifte aufgestellt, worin die Schreibstifte aus unterschiedlichen Reihen auf Luke stehen, so daß die Rasterpunkte einer Zeile nach und nach gefüllt werden. In solchen Fällen ist eine Umsortierung und Speicherung der matrixartig abgegriffenen Bildpunkte notwendig.

Bei Anwendungsfällen, bei denen für die elektrische Ansteuerung einer Druckform ein Ionentransport notwendig ist, wird gemäß einer anderen Ausführungsform der Erfindung eine Schreibeinheit vorgeschlagen, die aus einer Steuerelektrode und einer mit der Steuerelektrode zusammenwirkenden, feldformenden Zwischenelektrode besteht, die zumindest teilweise von einem Elektroyten umflutet sind.

Verantwortlich für den Ionentransport sind die Steuerelektrode und die die Druckform tragende Gegenelektrode. Zwischen diesen beiden Elektroden ist eine feldformende Zwischenelektrode angeordnet, mit der ein Querstrom zwischen den eigentlichen Elektroden verhindert wird. Der Querstrom greift auf benachbarte Rasterpunkte über und beeinträchtigt dabei deren Grauwert.

Die feldformende Zwischenelektrode ist nach einer erfindungsgemäßen Ausgestaltung topfförmig ausgebildet und mit einer zentrischen Bohrung im Boden der Elektrode versehen, durch die Elektrolyt zur Druckform strömen kann.

Mit dieser einfachen Form der Zwischenelektrode wird einerseits der punktförmige Querschnitt des Ionenstromes ausreichend begrenzt und außerdem ein ständiger Austausch der Elektrolytschicht an der Oberfläche der Druckform in einfacher Weise ermöglicht. Letzteres hat die Wirkung, daß Polarisationserscheinungen im Elektrolyten durch den ständigen Austausch vermieden werden.

Die maximale Rasterpunktgröße wird durch die Öffnung der Zwischenelektrode festgelegt, wobei davon ausgegangen wird, daß der Abstand zwischen der feldformenden Zwischenelektrode und der Druckform vorgegeben ist und konstant bleibt.

Auch hier kann die Steuerelektrode über einen Fotoleiter mittels optischer Steuerung betrieben werden, wobei Ausführungen gewählt werden können, wie sie bereits vorstehend beschrieben wurden.

Aufgrund der geringen elektrischen Schaltspannung können für die elektrochemische Ansteuerung auch einfachere Schaltelemente verwendet werden, wie z. B. integrierte bistabile Schaltelemente, die von CCD-Schieberegistern angesteuert werden. Solche Systeme werden z. B. in breiten Thermodruckköpfen von Thermoschreibern verwendet.

In beiden Fällen kann eine Grauwertdarstellung über unterschiedliche Ionenströme erreicht werden.

Vorzugsweise werden mehrere Schreibeinheiten, d. h. Steuerelektroden/Zwischenelektroden-Paare, in einer Baueinheit zusammengefaßt und von einer Elektrolytquelle versorgt. Aufgrund der Mindestbaugröße der Schreibeinheiten ist auch in diesem Fall die Anordnung von in mehreren Reihen auf Luke aufgeteilten Schreibeinheiten von Vorteil, um ohne mechanische Verschiebung der Aufzeichnungseinrichtung eine vollständige Beschriftung der Druckform zu erreichen.

Die Erfindung wird anhand von in der Zeichnung schematisch dargestellten Ausführungsbeispielen nach der Erfindung näher beschrieben. Es zeigen:
- Fig. 1: ein erstes Ausführungsbeispiel,
- Fig. 2 bis 4: Detailausführungen zum ersten Beispiel,
- Fig. 5 bis 7: ein zweites Ausführungsbeispiel,
- Fig. 8: eine mögliche Anordnung von Schreibeinheiten einer Aufzeichnungseinrichtung und
- Fig. 9: die Schreibfolge bei einer Anordnung gemäß Fig. 8.

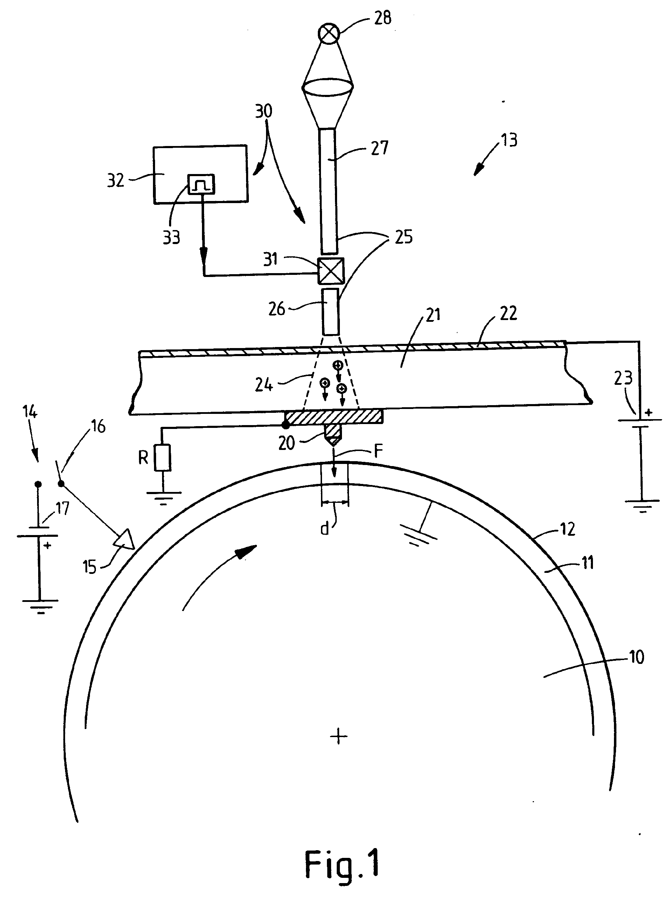

In Fig. 1 ist ein Formzylinder 10 mit einer daraufgespannten Druckform 11 dargestellt, deren Benetzungseigenschaft an der Oberfläche 12 für Druckfarbe mittels eines elektrischen Feldes F beeinflußbar ist. Zur Erzeugung von gezielten elektrischen Feldern F ist eine Aufzeichnungseinrichtung 13 vorgesehen, mit der die Benetzungseigenschaft der Oberfläche 12 der Druckform 11 örtlich entsprechend eines zu druckenden Bildes verändert oder beeinflußt werden kann.

Je nach Art der Druckform 11 ist eine entsprechende Löschvorrichtung 14 vorgesehen. Bei einer Druckform 11 aus ferromagnetischem Material besteht die Löschvorrichtung 14 beispielsweise in einer Linienelektrode 15, deren Länge der Länge des Formzylinders 10 bzw. der daraufliegenden Druckform 11 entspricht und die über einen Schalter 16 an eine entsprechende Spannung 17 anlegbar ist. Im Löschvorgang wird aufgrund des elektrischen Feldes zwischen der Linienelektrode 15 und des als Gegenelektrode ausgebildeten Formzylinders 10 die Oberfläche 12 der Druckkform 11 nach einer vollständigen Umdrehung des Formzylinders 10 einheitlich polarisiert. Mit der Aufzeichnungseinrichtung 13 können dann bestimmte Bereiche umpolarisiert werden, so daß die Oberflächenenergie der Druckform 11 sich örtlich entsprechend eines zu übertragenden Bildes verändert. Diese unterschiedlichen Bereiche zeichnen sich im unterschiedlichen Benetzungsverhalten für polare (Wasser) und unpolare (Druckfarbe) Flüssigkeiten ab. Sowohl die Druckform als auch die Löschvorrichtung sind nicht Gegenstand der Erfindung, sie werden daher nicht näher beschrieben.

Die Aufzeichnungseinrichtung 13 enthält einen Schreibstift 20, der mit seiner Stiftspitze gegen die Oberfläche 12 der Druckform 11 gerichtet ist. Der Schreibstift 20 ist über einen Fotoleiter 21 mit einer optisch transparenten Elektrode 22 verbunden, die permanent mit einer Spannungsquelle 23 verbunden ist. Dem Schreibstift 20 ist ferner ein Lichtleiter 25 zugeordnet, der aus einem ersten, gegen die optisch transparente Elektrode 22 gerichteten Abschnitt 26 und einem zweiten Abschnitt 27 besteht, der zumindest während des Aufzeichnungsvorganges ständig von einer Lichtquelle 28 beaufschlagt ist.

Dem Lichtleiter 25 ist eine Steuereinrichtung 30 zugeordnet, mit der der Lichtstrahl aus dem zweiten Lichtleiterabschnitt 27 kurzzeitig in den ersten Lichtleiterabschnitt 26 einkoppelbar ist. Diese Lichtimpulse durchqueren die optisch transparente Elektrode 22 und den Fotoleiter 21. Der Fotoleiter 21 wird an dieser Stelle elektrisch leitfähig, womit am Schreibstift 20 ein von der Leitfähigkeit bzw. der Lichtintensität abhängiges Potential zum Anliegen kommt. Zwischen der Spitze des Schreibstiftes 20 baut sich in Zusammenwirkung mit der Gegenelektrode 10 das elektrische Feld F auf, mit dem der vom elektrischen Feld durchflutete punktuelle Bereich der Druckform 11 umpolarisiert wird. Der Durchmesser d des elektrischen Feldes bzw. des dadurch beeinflußten Druckformbereiches hängt von der angelegten Spannung ab, die wiederum von der eingestrahlten Lichtintensität abhängt. Dem Schreibstift 20 ist ein Widerstand R zugeordnet, um neben der Spannungsteilung ein schnelles Abfließen der Ladung des Schreibstiftes 20 nach Abschalten der Lichteinstrahlung in den Fotoleiter 21 zu bewirken.

Die Steuervorrichtung besteht aus einem magneto-optischen Lichtschaltmodul 31 (LISA-Element), das mit einer Elektronik 32 ansteuerbar ist. Mit einem ersten Stromimpuls 33 von wenigen µs-Dauer und einem weiteren, ähnlich kurzen Stromimpuls wird das LISA-Element in einen lichtdurchlässigen und zurück in den lichtundurchlässigen Zustand geschaltet. Die Einkopplung eines Druckpunktes auf die Druckform 11 kann somit in wenigen µs, ca. 25 µs, durchgeführt werden.

Das Einlesen der Bildpunkte in die Elektronik 32 und das Ansteuern der Stromimpulse 33 mittels dieser kodierten Bilddateninformationen erfolgt nach bekannten Methoden.

Es ist prinzipiell möglich, die Aufzeichnungseinrichtung 13 mit einem einzigen Schreibstift 20 auszurüsten. Für die Einkopplung eines neuen Bildes ist dazu eine kombinierte Bewegung zwischen der Aufzeichnungseinrichtung 13, die sich entlang einer Zeile bewegen kann, und einem Zeilenvorschub, der vom Druckzylinder 10 durchgeführt wird, notwendig. Eine derartige Ausführung wird jedoch im allgemeinen nicht den Anforderungen der modernen Druckmaschinen gerecht. In der Regel wird man die Aufzeichnungseinrichtung mit mehreren Schreibeinheiten bzw. Schreibstiften 20 ausrüsten, die gleichzeitig bzw. matrixartig ansteuerbar sind, um damit nicht nur einen spürbaren Zeitgewinn, sondern auch eine Vereinfachung der gesamten Vorrichtung zu erreichen, indem auf weniger mechanische Bewegungen zurückgegriffen werden muß.

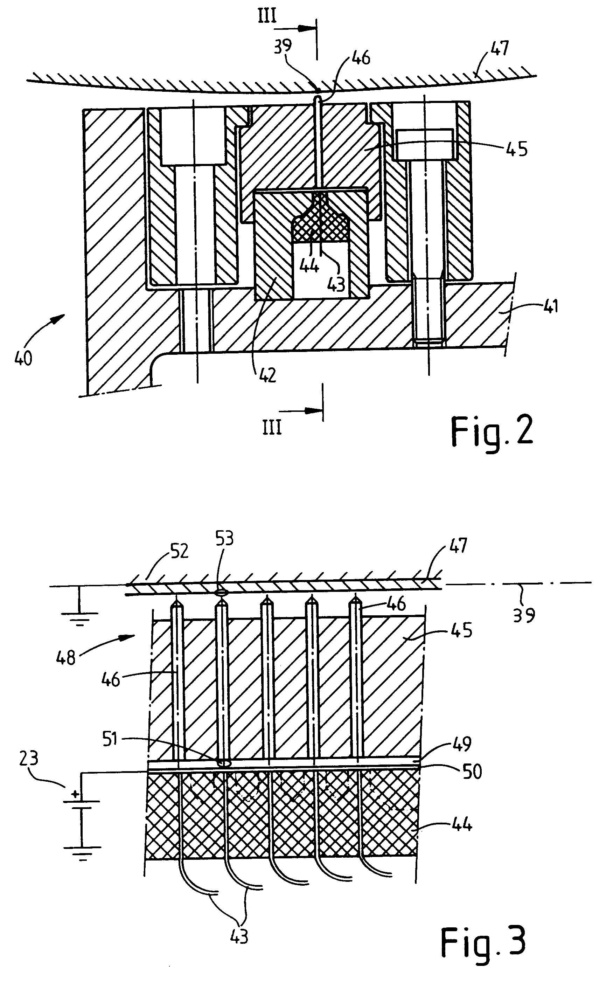

In den Fig. 2 und 3 ist eine Ausgestaltung mit mehreren in einer Reihe 48 angeordneten Schreibstiften 46 im Quer- bzw. Längsschnitt gezeigt.

In Fig. 2 ist ein Teil eines die Schreibstiftreihe tragenden Schreibkopfes 40 gezeichnet, der aus einem Träger 41 mit einer daran befestigten Lichtleiste 42 besteht. Die Lichtleiste 42 trägt die in einer Reihe angeordneten Lichtleiter 43, die mittels Gießharz 44 in der Lichtleiste 42 fixiert sind. Auf der Lichtleiste 42 ist ein Stiftträger 45 befestigt, der aus einem elektrisch isolierenden Material, z. B. Glaskeramik, besteht und die Schreibstifte 46 trägt. Der Schreibkopf 40 ist so angeordnet, daß sich die Schreibstifte 46 entlang einer Mantellinie 39 des Formzylinders bzw. der Druckform 47 befinden, wobei sich die Spitzen der Schreibstifte 46 in einem geringen Abstand von unter 1 mm von der Druckform 47 befinden.

Fig. 3 zeigt einen Schnitt durch die Linie III-III aus Fig. 2 entlang der Schreibstiftreihe 48. Wie Fig. 3 verdeutlicht, befindet sich zwischen der Lichtleiste 42 bzw. dem Gießharz 44 und dem Träger 45 zumindest im Bereich der Schreibstifte 46 eine Zwischenschicht, die aus einem Fotoleiter 49 und einer Elektrode 50 besteht. Der Fotoleiter 49 steht in Kontaktverbindung mit den Stiften 46, während sich die daran anschließende, lichtdurchlässige Elektrode 50 lichtleiterseitig befindet. Die Elektrode 50 ist an eine Hochspannung 23 angeschlossen. Die Lichtleiter 43 enthalten je eine nicht dargestellte Steuereinheit, wie sie z. B. im Zusammenhang mit Fig. 1 beschrieben wurde und erhalten das Licht von einer ebenfalls nicht dargestellten gemeinsamen Lichtquelle. Durch individuelle Ansteuerung der Lichtleiter 43 werden die Schreibstifte 46 entsprechend individuell aktiviert.

Strahlt beispielsweise der zweite Lichtleiter 43 von links in Fig. 3 einen Lichtstrahl aus, so wird der beleuchtete Bereich 51 des Fotoleiters elektrisch leitend und damit der zweite Schreibstift 46 von links über die Elektrode 50 an die Hochspannung 23 angeschlossen. In Verbindung mit der Gegenelektrode 52 wird zwischen der Schreibspitze und der Druckform 47 ein elektrisches Feld aufgebaut, mit dem die Druckform 47 im Bereich 53 in ihren Benetzungseigenschaften verändert wird.

Die Größe des Bereiches 53 bzw. der Radius des umgesteuerten Rasterpunktes an der Oberfläche der Druckform 47, der letztendlich den Grauwert des zu druckenden Bildes bestimmt, hängt vom individuell erzeugten elektrischen Feld ab. Mit einer Veränderung der Spitzenspannung kann daher in definierter Weise die Größe des zu schreibenden Rasterpunktes verändert werden. Nachdem die Spannung des Schreibstiftes 46 von der Leitfähigkeit des Fotoleiters und diese von der eingestrahlten Lichtintensität abhängt, kann die Steuerung der Graustufen durch Variieren der Lichtintensität erfolgen.

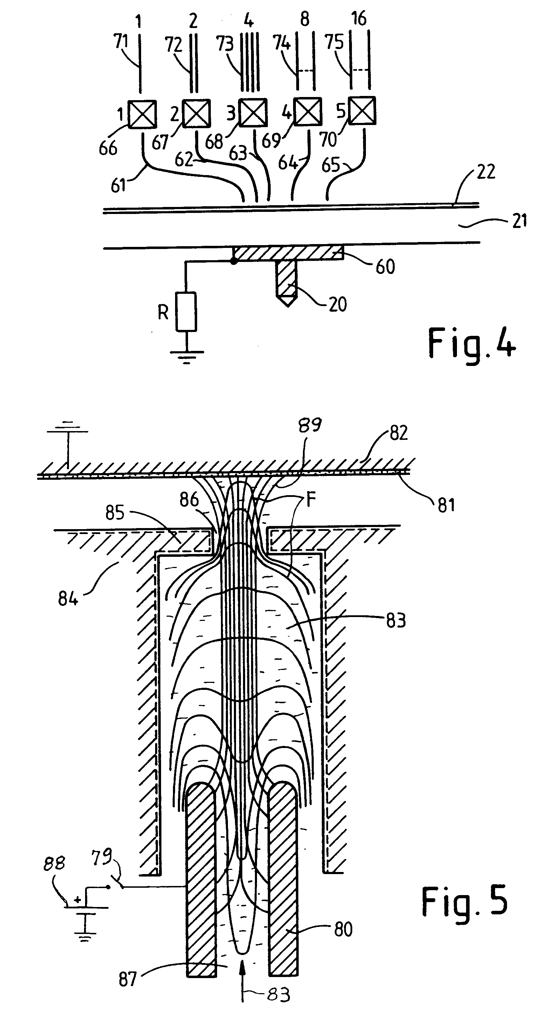

In Fig. 4 ist ein Beispiel gezeigt, wie über Lichtleiter unterschiedliche Lichtintensitäten in den Fotoleiter einkoppelbar sind. Die Anordnung besteht in der Verwendung von mehreren jeweils einem Schreibstift zugeordneten Lichtleitern, die individuell ansteuerbar und mit unterschiedlicher Intensität beleuchtbar sind.

In Fig. 4 ist der Einfachheit halber ein Schreibstift 20 einer Aufzeichnungseinrichtung nach Fig. 1 dargestellt. Der Schreibstift 20 ist zur Vergrößerung der Kontaktstelle mit einer verbreiteten Leiterplatte 60 mit dem Fotoleiter 21 verbunden. Dem Schreibstift 20 sind fünf Lichtleiter 61 bis 65 zugeordnet, die je mit einem Lichtschaltmodul 66 bis 70 ausgerüstet sind. Jedem Lichtleiter 61 bis 65 sind wiederum unterschiedlich viele Verbindungsleiter 71 bis 75 zugeordnet, die die Lichtstrahlen von einer nicht dargestellten Lichtquelle zu dem Lichtschaltmodul 66 bis 70 führen. So sind beispielsweise dem Lichtleiter 61 ein Verbindungsleiter, dem Lichtleiter 62 zwei Verbindungleiter 72, dem Lichtleiter 63 vier Verbindungsleiter 73, dem Lichtleiter 64 acht Verbindungsleiter 74 und dem Lichtleiter 65 sechzehn Verbindungsleiter 75 zugeordnet. Durch Einschalten eines oder gleichzeitig mehrerer Lichtschaltmodule 66 bis 70 können bei der Ausführung nach Fig. 4 zweiunddreißig verschiedene Lichtmengen auf den Fotoleiter 21 gerichtet und damit zweiunddreißig Widerstandsstufen eingestellt werden. Entsprechend wird der Radius bzw. der Grauwert des entsprechenden Rasterpunktes bestimmt. Jedem Schreibstift 20 einer Aufzeichnungseinrichtung ist die vorstehende Anzahl von Lichtleitern 61 bis 65, 71 bis 75 zuzuordnen.

Die Lichtleiter sind in den dargestellten Ausführungen jeweils dem zugehörigen Schreibstift gegenübergestellt. Diese räumliche Zuordnung ist nicht zwingend notwendig. Wenn es aus fertigungstechnischen oder räumlichen Gründen zweckmäßig ist, lassen sich Lichtleiter und Schreibstifte versetzt anordnen. In diesem Fall wird der Versetzungsabstand mittels Leiterbahnen, die die Leiterplatten 60 ersetzen, überbrückt. Die Leiterbahn stellt somit den elektrischen Kontakt zwischen dem leitenden Bereich des Fotoleiters mit dem zugehörigen Schreibstift her.

Die Fig. 5 bis 7 stellen ein weiteres Ausführungsbeispiel dar, mit der eine elektrochemische Ansteuerung von Druckformen möglich ist.

Fig. 5 zeigt stark vergrößert eine mögliche Ausführung einer Schreibeinheit für eine elektrochemisch arbeitende Aufzeichnungseinrichtung. Die Schreibeinheit besteht in einer ersten hülsenförmig ausgebildeten Steuerelektrode 80, die an eine Stromquelle 88 anschließbar ist und die in Zusammenwirkung mit einer die Druckform 81 tragenden Gegenelektrode 82 ein elektrisches Feld F aufbaut, mit dem ein Ionenstrom 89 in einem Elektrolyten 83 angeregt wird, der sich im Bereich zwischen der ersten Steuerelektrode 80 und der Gegenelektrode 82 befindet.

Mit einer Schreibeinheit, die nur die Elektrode 80 enthält, würde der aufgrund des durch den Ionenstrom 89 auf der Druckform 81 umgesteuerten Bereiches erzeugte Rasterpunkt aus einem dunklen Kern mit nach außen abnehmendem Grauwert bestehen, wobei je nach Größe dieses Kernes ein unterschiedlicher Grauwert auf Nachbarpunkte übertragen würde. Um diese Grauwertverschleppung auf Nachbarpunkte zu vermeiden, ist eine Zwischenelektrode 84 vorgesehen, die den Ionenstrompfad 89 richtet. Die Zwischenelektrode 84 besteht gemäß Fig. 5 aus einem topfförmigen, stromisolierten Gebilde, das zumindest die Spitze der Steuerelektrode 80 umgibt und dessen Boden 85 mit einer zentralen Öffnung 86 eine Blende bildet. Diese Zwischenelektrode 84 dient mit ihrer Blende 85, 86 als ein feldformendes Element, das in konstantem, fest vorgegebenen Abstand von der Steuerelektrode 80 die Konfiguration des Feldes F und damit die Stromverteilung bestimmt. Die Blende 85, 86 der feldformenden Zwischenelektrode 84 wird im geringen Abstand im Bereich von 0,1 mm vom Formzylinder 82 angeordnet.

Die zentrale Öffnung 87 der Steuerelektrode 80 dient zur Zuführung des Elektrolyten 83. Ein ständiger Austausch der Elektrolytschicht an der Oberfläche der Druckform 81 trägt zur Vermeidung von Polarisationserscheinungen im Elektrolyten bei.

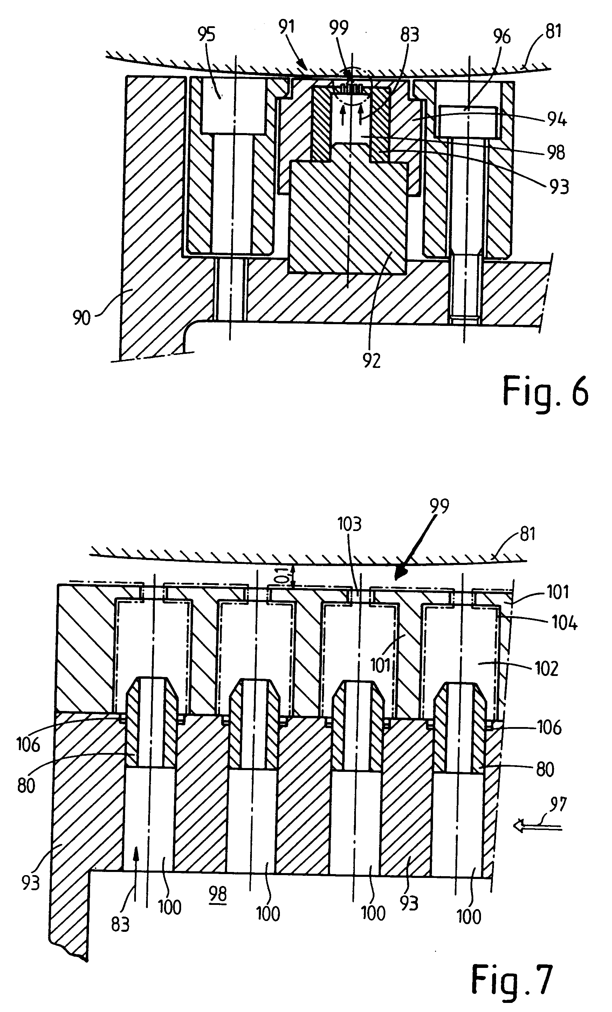

Eine Ausgestaltung einer Aufzeichnungseinrichtung mit in vier Reihen bestückten Schreibeinheiten gemäß Fig. 5 ist im Querschnitt in Fig. 6 dargestellt. An einem nur teilweise gezeichneten Träger 90 ist eine Aufzeichnungseinrichtung 91, bestehend aus einem Verteiler 92 für den Elektrolyten, einem Elektrodenträger 93 und einer Schreibschiene 94 mittels Schrauben 95, 96 befestigt. Der Elektrodenträger 93 bildet einen Elektrolytkanal 98 und trägt vier Reihen mit Schreibeinheiten 99, die in Fig. 7 vergrößert dargestellt sind.

Der Elektrodenträger 93 ist in der Breite so ausgelegt, daß vier Schreibeinheiten nebeneinander Platz finden, während die Länge des Elektrodenträgers der Breite der Druckfrom 81 entspricht. Am Kopfende hat der Elektrodenträger 93 matrixartig verteilte Bohrungen 100, die als Durchfluß für das Elektrolyt 83 zu den einzelnen Schreibeinheiten dienen, und die jeweils eine hülsenförmige Steuerelektrode 80 aufnehmen. Die feldformende Zwischenelektrode 101 ist ebenfalls blockartig ausgebildet und mit den der jeweiligen Steuerelektrode 80 zugeordneten Bohrungen 102 und 103 versehen, durch die das Elektrolyt nach dem Austritt aus der jeweiligen Steuerelektrode 80 an die Druckform 81 gelangt. Zur individuellen Ansteuerung der Steuerelektroden 80 sind mit den Steuerelektroden 80 elektrisch kontaktierende Leiterbahnen 106 vorgesehen. Die Zwischenelektrode 101 kann aus einem elektrisch leitfähigen Material, z. B. Metall, hergestellt sein; in diesem Fall wird sie mit einer elektrisch isolierenden Schicht 104, z. B. einem Oxid, beschichtet. Mittels konventionellen Fördervorrichtungen wird das Elektrolyt 83 durch die Kanäle 100, 102, 103 der Schreibeinheiten 99 gefördert.

Die Einkopplung der Bildinformation in die Druckform 81 erfolgt durch Anlegen der entsprechenden Steuerelektroden 80 an die Stromquelle 88, wobei an den betreffenden Schreibeinheiten jeweils ein Ionentransport stattfindet und entsprechende Rasterpunkte durch entsprechende elektrochemische Änderung der Oberfläche der Druckform 81 eingekoppelt werden. Durch Umkehrung des Stromflusses wird die Änderung rückgängig gemacht, so daß die Druckform 81 für die Einbringung eines weiteres Bildes wieder zur Verfügung steht.

Aufgrund der für diese Aufzeichnungseinrichtung benötigten geringen Stromdichten von etwa 10 mA/cm² können hier integrierte bistabile Schaltelemente 79 für die Steuerelektroden verwendet werden, die mit Schieberegistern angesteuert werden. Hierzu können bekannte Ausführungen Anwendung finden. Eine Ansteuerung mit LISA-Elementen und Lichtleitern, wie sie für das vorhergehende Ausführungsbeispiel beschrieben sind, sind grundsätzlich auch hier anwendbar, jedoch ist eine derartige Steuereinrichtung wegen der geringen elektrischen Schaltspannungen aufwendig.

Um eine rasche Einkopplung von Bilddaten auf eine Druckform mit der einen oder der anderen Aufzeichnungsart zu erreichen, wird man eine Aufzeichnungseinrichtung vorziehen, bei der eine Zeile mit Schreibeinheiten ausgerüstet ist und wobei jedem Rasterpunkt eine Schreibeinheit zugeordnet ist, so daß die Druckform direkt zeilenweise beschreibbar ist.

Dieses läßt sich jedoch nicht immer verwirklichen, was auf die Mindestbaugrößen von Schreibeinheiten zurückzuführen ist, oder im Falle der rein elektrischen Aufzeichnungseinrichtung durch die hohen elektrischen Feldstärken bedingt ist. Zwischen den Schreibspitzen bzw. Schreibeinheiten wird in der Regel ein Mindestabstand bestehen. Diesem Umstand Rechnung tragend, können die Rasterpunkte, d. h. die zugehörigen Schreibeinheiten, auf mehrere Zeilen verteilt und auf Luke angeordnet werden, so daß die Rasterpunkte einer Zeile zwar erst nach mehreren Vorschüben voll beschrieben, jedoch mehrere Zeilen gleichzeitig mit diskreten Rasterpunkten bedruckt werden. Auf diese Weise wird eine Druckform auch in einem Durchgang beschrieben werden können.

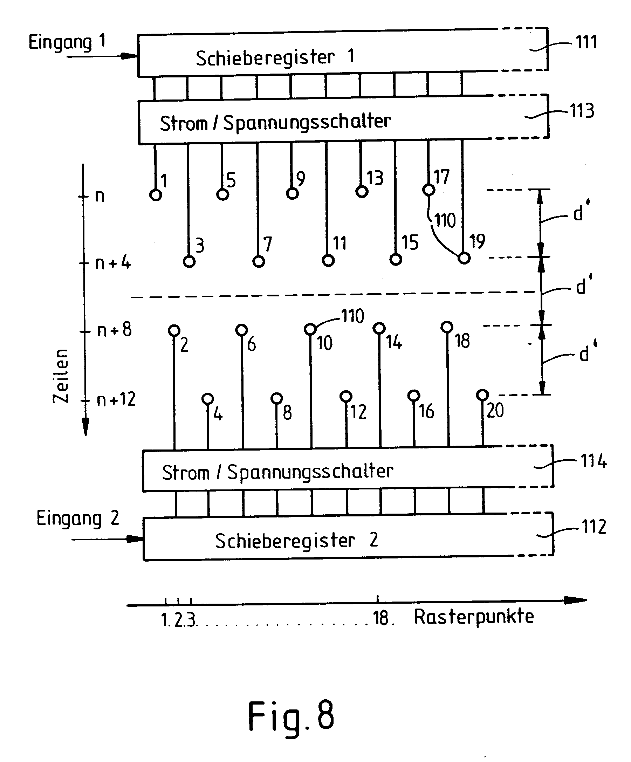

In Fig. 8 ist eine derartige Anordnung schematisch gezeigt. Dabei stellen die Kreise die Position 110 der Schreibeinheiten, d. h. Schreibspitzen, in einer Aufzeichnungseinrichtung dar, wobei die zugeordneten Ziffern 1...20 die Rasterpunkte in Zeilenrichtung darstellen. Die Schreibeinheiten sind in vier Zeilen n, n+4, n+8 und n+12 aufgeteilt, die jeweils durch drei "Leerzeichen" getrennt bzw. im Abstand d′ voneinander stehen. Die Zuordnung der Schreibeinheiten zu den Rasterpunkten 1, 2, 3, 4 ... erfolgt abwechselnd von Zeile zu Zeile.

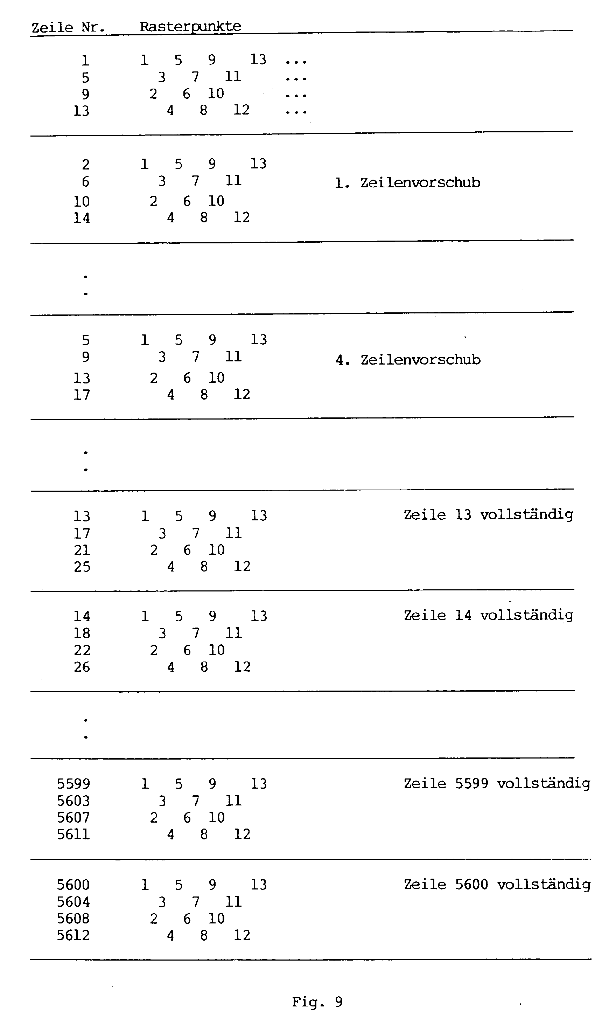

Die Dateneinkopplung erfolgt wie nachstehend beschrieben. Über zwei Schieberegister 111 und 112 und je nach Anwendung von zwei Strom- bzw. Spannungsschaltern 113, 114 werden die Schreibeinheiten entsprechend ihrer Anordnung 110 und dem zu übermittelnden Bild angesteuert. Dabei werden zu Beginn des Schreibvorganges in der ersten Zeile der Druckform die Rasterpunkte 1, 5, 9, 13, 17 usw., in der fünften Zeile die Rasterpunkte 3, 7, 11 usw., in der neunten Zeile die Rasterpunkte 2, 6 usw. und in der dreizehnten Zeile die Rasterpunkte 4, 8, 12, 16, 20 usw. umgesteuert. Die Schreibfolge dieser Rasterpunkte ist im ersten Abschnitt der Fig. 9 wiedergegeben.

Danach folgt ein Zeilenvorschub, womit nun die Zeilen 2, 6, 10 und 14 in ähnlicher Weise beschrieben werden. Nach vier Zeilenvorschüben wird die dreizehnte Zeile, in der bereits die Rasterpunkte 4, 8, 12 usw. beschrieben sind, mit den Rasterpunkten 2, 6, 10, 14 usw. ergänzt. Im achten Zeilenvorschub (nicht in Fig. 9 eingetragen) erhält die dreizehnte Zeile die weiteren Rasterpunkte 3, 7, 11 usw. um schließlich im zwölften Zeilenvorschub die dreizehnte Zeile zu vervollständigen. Nach und nach werden auf diese Weise sämtliche Zeilen mit einem Durchgang der Druckform beschrieben.

Diese sprungweise Ansteuerung bzw. Einkopplung von Bildpunkten erfordert eine Zwischenspeicherung der Bilddaten, und zwar in einer Reihenfolge, wie sie mit der entsprechenden Aufzeichnungseinrichtung auf die Druckform zu übertragen ist.

## Patentansprüche

1. Elektrische Aufzeichnungseinrichtung mit mindestens einer als Elektrode ausgebildeten Schreibeinheit zur örtlichen und punktuellen Beeinflussung von Druckformen für Druckmaschinen, wobei der oder die Schreibeinheit(en) an eine Spannungsquelle anschließbar und entsprechend einem auf die Druckform zu übertragenden Druckbild ansteuerbar ist bzw. sind,
dadurch gekennzeichnet,
daß der oder die Schreibeinheit(en) Schreibstifte (20) sind, die über einen Fotoleiter (21) mit der Spannungsquelle (23) verbindbar sind, und daß zur örtlichen und zeitlichen Beeinflussung des Fotoleiters und damit zur Ansteuerung des Schreibstiftes eine punktuelle Strahlungsquelle, beispielsweise Lichtquelle (28, 25) vorgesehen ist, deren Strahl (24) einem Schreibstift zugeordnet durch den Fotoleiter richtbar ist.

2. Einrichtung nach Anspruch 1, dadurch gekennzeichnet, daß die Lichtstrahlen (24) mittels eines Lichtleiters (25) auf den Fotoleiter (21) gerichtet werden.

3. Einrichtung nach Anspruch 2, dadurch gekennzeichnet, daß einem Schreibstift (20) mehrere, einzeln ansteuerbare Lichtleiter (61 bis 65) zugeordnet sind.

4. Einrichtung nach einem der vorhergehenden Ansprüche, dadurch gekennzeichnet, daß zur Ansteuerung der Lichtquelle (28, 25) ein magneto-optisches Lichtschaltmodul (31) vorgesehen ist.

5. Einrichtung nach Anspruch 4, dadurch gekennzeichnet, daß das magneto-optische Lichtschaltmodul (31) im Lichtleiter (25) zwischengeschaltet ist.

6. Einrichtung nach den Ansprüchen 3 bis 5, dadurch gekennzeichnet, daß die einzelnen einem Schreibstift (20) zugeordneten Lichtleiter (61 bis 65) über das jeweilige Lichtschaltmodul (66 bis 70) mit unterschiedlicher Anzahl von Verbindungslichtleitern (71 bis 75) verbunden sind, die das Licht von einer Lichtquelle zu den Lichtschaltermodulen leiten.

7. Einrichtung nach einem der vorhergehenden Ansprüche, dadurch gekennzeichnet, daß mehrere Schreibstifte (46) in mindestens einer Reihe (48) über einen gemeinsamen Fotoleiter (49) mit einer gemeinsamen lichtdurchlässigen Elektrode (50) verbunden sind.

8. Einrichtung nach einem der vorhergehenden Ansprüche, dadurch gekennzeichnet, daß die Einrichtung (20 bis 28) zur Ansteuerung von Druckformen mit ferroelektrischer Schicht (12) verwendet wird.

9. Elektronische Aufzeichnungseinrichtung mit mindestens einer als Elektrode ausgebildeten Schreibeinheit zur örtlichen und punktuellen Beeinflussung von elektrochemisch umsteuerbaren Druckformen (81) für Druckmaschinen, wobei die an eine Spannungsquelle anschließbare Schreibeinheit oder anschließbaren Schreibeinheiten aus einer Steuerelektrode (80), einer die Druckform (81) tragenden Gegenelektrode (82) sowie einem zwischen beiden Elektroden (80, 82) vorgesehenen Elektrolyten (83) besteht bzw. bestehen und entsprechend einem auf die Druckform zu übertragenden Druckbild ansteuerbar ist bzw. sind, dadurch gekennzeichnet, daß die Schreibeinheit oder Schreibeinheiten zusätzlich eine Zwischenelektrode (84, 101) aufweist bzw. aufweisen, die zumindest teilweise von dem Elektrolyten (83) umflutet wird und in dem Bereich zwischen der Steuerelektrode (80) und der die Druckform (81) tragenden Gegenelektrode (82) angeordnet ist, so daß die Zwischenelektrode (84, 101) das elektrische Feld zwischen der Steuerelektrode (80) und der Druckform (81) formt.

10. Einrichtung nach Anspruch 9, dadurch gekennzeichnet, daß die feldformende Zwischenelektrode (84) topfförmig ausgebildet ist, daß deren Boden (85) zur Bildung einer Blende eine zentrale Bohrung (86) aufweist, durch die das Elektrolyt zur Druckform (81) durchführbar ist.

11. Einrichtung nach Anspruch 9 oder 10, dadurch gekennzeichnet, daß mehrere Steuerelektroden/Zwischenelektroden-Paare (80, 101) in mindestens einer Reihe mit einem gemeinsamen Träger (93) verbunden sind.

12. Einrichtung nach Anspruch 11, dadurch gekennzeichnet, daß die Steuerelektroden/Zwischenelektroden-Paare (80, 101) in mindestens zwei Reihen (97) angeordnet sind und auf benachbarten Reihen jeweils auf Lücke stehen.

## Claims

1. An electrical recording device with at least one recording unit constructed as an electrode for localized and point influencing of printing forms for printing machines, wherein the recording unit or units can be connected to a voltage source and can be controlled according to a printing format which is to be transferred onto the printing form, characterized in that the recording unit or units are recording styluses (20) which can be connected by means of a photoconductor (21) with the voltage source (23) and that for localized and temporal influencing of the photoconductor and consequently to control the recording stylus, there is provided a point source of radiation, for instance a light source (28, 25), the beam of which (24), can be directed to an allocated recording stylus through the photoconductor.

2. A device according to claim 1, characterized in that the light beams (24) are directed onto the photoconductor (21) by means of a fibre-optic light guide (25).

3. A device according to claim 2, characterized in that several individually controllable fibre-optic light guides (61 to 65) are allocated to a recording stylus (20).

4. A device according to one of the preceding claims, characterized in that a magneto-optic light switch module (31) is provided to control the light source (28, 25).

5. A device according to claim 4, characterized in that the magneto-optic light switch module (31) is inserted in the fibre-optic light guide (25).

6. A device according to claims 3 to 5, characterized in that the individual fibre-optic light guides (61 to 65) which are allocated to a recording stylus (20) are connected with varying numbers of connecting fibre-optic light guides (71 to 75) by means of the corresponding light switch module (66 to 70), said connecting fibre-optic light guides guiding the light from a light source to the light switch modules.

7. A device according to one of the preceding claims, characterized in that several recording styluses (46) are connected in at least one row (48) with a common transparent electrode (50) by means of a common photoconductor (49).

8. A device according to one of the preceding claims, characterized in that the device (20 to 28) is used to control printing forms with a ferroelectric film (12).

9. An electronic recording device with at least one recording unit constructed as an electrode for localized and point influencing of electrochemically reversible printing forms (81) for printing machines, wherein the recording unit or recording units which can be connected to a voltage source and can be controlled according to a printing format which is to be transferred onto the printing form, comprises or comprise a control electrode (80), a counter-electrode (82) which carries the printing form (81) and also an electrolyte (83) provided between the two electrodes (80, 82), characterized in that the recording unit or recording units comprises or comprise in addition an intermediate electrode (84, 101) which is surrounded at least partially by the electrolyte (83) and is disposed in the region between the control electrode (80) and the counter-electrode (82) which carries the printing form (81), so that the intermediate electrode (84, 101) shapes the electric field between the control electrode (80) and the printing form (81).

10. A device according to claim 9, characterized in that the intermediate electrode (84) which forms the field is cup-shaped, in that its base (85) comprises a central bore (86) to form an aperture, through which the electrolyte can be led to the printing form (81).

11. A device according to claim 9 or 10, characterized in that several pairs of control electrodes/intermediate electrodes (80, 101) are connected in at least one row with a common carrier (93).

12. A device according to claim 11, characterized in that the pairs of control electrodes/intermediate electrodes (80, 101) are disposed in at least two rows (97) and are each staggered on adjacent rows.

## Revendications

1. Dispositif d'enregistrement électrique comprenant au moins une unité d'écriture constituée par une électrode, pour agir de façon locale et ponctuelle sur des formes d'impression pour machines à imprimer, dans lequel l'unité d'écriture ou les unités d'écriture peut ou peuvent être connectée(s) à une source de tension et commandée(s) en accord avec une image d'impression à reporter sur la forme d'impression,
caractérisé
en ce que l'unité d'écriture ou les unités d'écriture est ou sont un ou des stylet(s) (20) qui peut ou peuvent être connecté(s) à la source de tension (23) par l'intermédiaire d'un photoconducteur (21) et en ce que, pour agir localement et temporairement sur le photoconducteur et, de ce fait, pour commander le stylet, il est prévu une source de rayonnement ponctuel, par exemple une source lumineuse (28, 25) dont le rayon (24) associé à un stylet peut être projeté à travers le photoconducteur.

2. Dispositif selon la revendication 1, caractérisé en ce que les rayons lumineux (24) sont dirigés vers le photoconducteur (21) au moyen d'un conducteur de lumière (25).

3. Dispositif selon la revendication 2, caractérisé en ce que plusieurs conducteurs de lumière (61 à 65) pouvant être commandés individuellement peuvent être associés à un stylet (20).

4. Dispositif selon une des revendications précédentes, caractérisé en ce qu'il est prévu un module de commutation de lumière magnéto-optique (31) pour la commande de la source lumineuse (28, 25).

5. Dispositif selon la revendication 4, caractérisé en ce que le module de commutation de lumière magnéto-optique (31) est intercalé dans le conducteur de lumière (25).

6. Dispositif selon les revendications 3 à 5, caractérisé en ce que les différents conducteurs de lumière (61 à 65) associés à un stylet (20) sont connectés par le module de commutation de lumière (66 à 70) correspondant à un nombre variable de conducteurs de lumière de liaison (71 à 75) qui conduisent la lumière d'une source de lumière au module de commutation de lumière.

7. Dispositif selon une des revendications précédentes, caractérisé en ce que plusieurs stylets (46) contenus dans au moins une rangée (48) sont connectés à une électrode commune (50) transparente à la lumière par l'intermédiaire d'un photoconducteur (49).

8. Dispositif selon une des revendications précédentes, caractérisé en ce que le dispositif (20 à 28) est utilisé pour activer des formes d'impression portant une couche ferroélectrique (12).

9. Dispositif d'enregistrement électronique comprenant au moins une unité d'écriture constituée par une électrode, pour agir de façon locale et ponctuelle sur des formes d'impression réversibles (81) par voie électro-chimique pour machines à imprimer, l'unité d'écriture ou les unités d'écriture qui peut ou peuvent être connectée(s) à une source de tension étant constituée(s) par une électrode de commande (80), une contre-électrode (82) qui porte la forme d'impression et un électrolyte (83) prévu entre les deux électrodes (80, 82) et être commandée(s) en accord avec une image à imprimer qu'il s'agit de reporter sur la forme d'impression, caractérisé en ce que l'unité d'écriture ou les unités d'écriture présente(nt) en supplément une électrode intermédiaire (84, 101) qui est entourée au moins partiellement par l'écoulement d'électrolyte (83) et disposée entre dans la région comprise entre l'électrode de commande (80) et la contre-électrode (82) qui porte la forme d'impression (81), de sorte que l'électrode intermédiaire (84, 101) met le champ électrique en forme entre l'électrode de commande (80) et la forme d'impression (81).

10. Dispositif selon la revendication 9, caractérisé en ce que l'électrode intermédiaire (84) de conformation du champ est en forme de godet, en ce que son fond (85) présente, pour la formation d'un diaphragme, un perçage central (86) à travers lequel l'électrolyte peut être envoyé à la forme d'impression (81).

11. Dispositif selon la revendication 9 à 10, caractérisé en ce que plusieurs paires électrode de commande/électrode intermédiaire (80, 101) sont réunies à un support commun (93) en au moins une rangée.

12. Dispositif selon la revendication 11, caractérisé en ce que les paires électrode de commande/électrode intermédiaire (80, 101) sont disposées en au moins deux rangées (97) et disposées en quinconce dans les rangées voisines.
